(19) Europäisches Patentamt
European Patent Office
Office européen des brevets

(11) **EP 4 675 905 A1**

(12) **EUROPEAN PATENT APPLICATION**

(43) Date of publication:
**07.01.2026 Bulletin 2026/02**

(21) Application number: **25185851.0**

(22) Date of filing: **27.06.2025**

(51) International Patent Classification (IPC):
*H02M 1/00* (2006.01)     *H02M 7/48* (2007.01)
*H02M 7/5387* (2007.01)     *H02M 7/5395* (2006.01)

(52) Cooperative Patent Classification (CPC):
**H02M 7/53871; H02M 1/0054; H02M 1/0058;
H02M 7/4815; H02M 7/5395**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **04.07.2024 CN 202410889341**

(71) Applicant: **SHENZHEN POWEROAK NEWENER
CO., LTD
Shenzhen, Guangdong 518000 (CN)**

(72) Inventors:
• **CANG, Wentao
Shenzhen, Guangdong, 518000 (CN)**

• **LEI, Jianhua
Shenzhen, Guangdong, 518000 (CN)**
• **MA, Hui
Shenzhen, Guangdong, 518000 (CN)**
• **QIN, Geng
Shenzhen, Guangdong, 518000 (CN)**
• **GUO, Zhihua
Shenzhen, Guangdong, 518000 (CN)**
• **HAO, Chuantong
Shenzhen, Guangdong, 518000 (CN)**

(74) Representative: **Santarelli
Tour Trinity
1 bis Place de la Défense
92400 Courbevoie (FR)**

(54) **GRID-CONNECTED INVERTER CONTROL METHOD AND GRID-CONNECTED INVERTER**

(57)     The present application discloses a grid-connected inverter control method and a grid-connected invert, wherein the method comprises the following steps: based on the waveform data of an output capacitor voltage and the corresponding filter inductor current, determining a calculation rule of the switching period $T_s$ meeting the zero-voltage switching condition and the mapping relationship between the capacitance value of the output capacitor and the voltage difference between a DC input voltage and a grid voltage; according to the polarity of the grid-connected reference current, determining the switching transistor operating at high frequency; according to the grid-connected current and the grid-connected reference current, determining the duty ratio based on a closed-loop regulation mechanism; calculating the switching period $T_s$ according to the calculation rule of the switching period $T_s$, the mapping relationship, the DC input voltage, the grid voltage, the grid-connected reference current and the duty ratio; and controlling the zero-voltage switching of the switching transistor according to the switching period $T_s$ and the duty ratio. By adopting the method of the present application, zero-voltage switching of the switching transistor is realized, which effectively reduces the loss caused by the turn-on process of the switching transistor.

Based on the waveform data of an output capacitor voltage across a switching transistor operating at high frequency and the corresponding filter inductor current, determining a calculation rule of the switching period meeting the zero-voltage switching condition and the mapping relationship between the capacitance value of the output capacitor and the voltage difference between a DC input voltage and a grid voltage — S101

Acquiring the DC input voltage, the grid voltage, a grid-connected current and a grid-connected reference current — S102

According to the polarity of the grid-connected reference current, determining the switching transistor operating at high frequency — S103

According to the grid-connected current and the grid-connected reference current, determining the duty ratio based on a closed-loop regulation mechanism — S104

Calculating the switching period according to the calculation rule of the switching period, the mapping relationship, the DC input voltage, the grid voltage, the grid-connected reference current and the duty ratio — S105

Controlling the zero-voltage switching of the switching transistor according to the switching period and the duty ratio — S106

FIG.1

EP 4 675 905 A1

**Description**

**Technical Field**

The present application relates to the technical field of micro-grids, and in particular, relates to a grid-connected invert control method and a grid-connected inverter.

**Background of the Invention**

Grid-connected inverters are widely used in the technical field of micro-grids, and common grid-connected inverters are composed of four switching transistors and a filter circuit. By controlling the high-frequency switching operation of the switching transistors, high-frequency current is generated, which is then converted into utility-frequency alternating current via the filter circuit before being fed into the grid. However, the conventional hard-switching control method will result in a significant turn-on loss of the switching transistor, which is not conducive to the development of grid-connected inverters towards high frequency and high efficiency.

**Summary of the Invention**

An embodiment of the present application aims to provide a grid-connected inverter control method and a grid-connected inverter, so as to solve the problem of excessive turn-on loss of a switching transistor in the grid-connected inverter of the prior art.

In order to solve the above technical problems, an embodiment of the present application provides the following technical solution.

According to an aspect of the present application, a grid-connected inverter control method is provided, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, and a grid *Grid,* and the method comprises:

Step A, based on the waveform data of an output capacitor voltage across a switching transistor operating at high frequency and the corresponding filter inductor current, determining a calculation rule of the switching period $T_s$ meeting the zero-voltage switching condition and the mapping relationship between the capacitance value of the output capacitor and the voltage difference between a DC input voltage and a grid voltage;

Step B, acquiring the DC input voltage, the grid voltage, a grid-connected current and a grid-connected reference current;

Step C, according to the polarity of the grid-connected reference current, determining the switching transistor operating at high frequency;

Step D, according to the grid-connected current and the grid-connected reference current, determining the duty ratio based on a closed-loop regulation mechanism;

Step E, calculating the switching period $T_s$ according to the calculation rule of the switching period $T_s$, the mapping relationship, the DC input voltage, the grid voltage, the grid-connected reference current and the duty ratio; and

Step F, controlling the zero-voltage switching of the switching transistor according to the switching period $T_s$ and the duty ratio.

Optionally, the Step A comprises:

based on a set of waveform data of the output capacitor voltage across the switching transistor operating at high frequency and the corresponding filter inductor current in a switching period, determining the start/end time point of the switching period $T_s$ meeting the zero-voltage switching condition;

according to the start/end time point of the switching period $T_s$, determining each of stages included in the switching period $T_s$ and the calculation rule of each of the stages; and

obtaining the calculation rule of the switching period $T_s$ according to the calculation rule of each of the stages.

Optionally, the start/end time point of the switching period $T_s$ meeting the zero-voltage switching condition is the time point when the filter inductor current and the output capacitor voltage are both zero in the set of waveform data.

Optionally, the switching period $T_s$ comprises a switching transistor on-stage $T_{on}$, an output capacitor charging stage $T_1$, a switching transistor off-stage $T_{off}$, a first resonance stage $T_2$, a body diode clamping stage $T_3$ and several second resonance stages $T_4$.

Optionally, the calculation rule of the switching period $T_s$ is:

$$\begin{cases} T_s = T_{on} + T_{off} + T_1 + T_2 + T_3 + nT_4 \\[2mm] T_{on} = \dfrac{2Li_p}{V_{in} - |V_{grid}|} \\[4mm] T_{off} = \dfrac{2Li_p}{V_{in} + |V_{grid}|} \\[4mm] T_1 = \dfrac{2LC}{2|i_{ref}| + \sqrt{\dfrac{C}{2L}}\left(V_{in} + |V_{grid}|\right)} \\[6mm] T_2 = \sqrt{2LC}\, arccos\left(\dfrac{|V_{grid}| - V_{in}}{|V_{grid}| + V_{in}}\right) \\[4mm] T_3 = \sqrt{2LC}\left(\dfrac{V_{in} + |V_{grid}|}{V_{in} - |V_{grid}|}\right) sin\left(\dfrac{T_2}{\sqrt{2LC}}\right) \\[4mm] T_4 = 2\pi\sqrt{2LC} \end{cases}$$

wherein, $n$ is the adjustment value of the switching period $T_s$ and is an integer greater than or equal to zero, $L$ is the inductance value of the filter inductor, $i_p = \dfrac{duty \times (T_1 + T_2 + T_3 + nT_4)(V_{in}^2 - V_{grid}^2)}{2L(V_{in} + |V_{grid}| - 2dutyV_{in})}$, $i_p$ is the peak value of the filter inductor current, duty is the duty ratio, $V_{in}$ is the DC input voltage, $V_{grid}$ is the grid voltage, $i_{ref}$ is the grid-connected reference current, and $C$ is the capacitance value of the output capacitor, which has a mapping relationship expressed as $C = f_3(V_{in} - V_{grid})$ with the voltage difference $V_{in} - V_{grid}$.

Optionally, the Step A further comprises:

based on multiple sets of waveform data of the output capacitor voltage across the switching transistor operating at high frequency and the corresponding filter inductor current in different switching periods, measuring $T_4$ under conditions of different DC input voltages $V_{in}$ and different grid voltages $V_{grid}$, and calculating the capacitance value C of the corresponding output capacitor according to the measured $T_4$;
by taking the difference $(V_{in} - V_{grid})$ between the different DC input voltages $V_{in}$ and the different grid voltages $V_{grid}$ as input and taking the capacitance value $C$ of the output capacitor calculated according to the different DC input voltages $V_{in}$ and the different grid voltages $V_{grid}$ as output, obtaining the mapping relationship $C = f_3(V_{in} - V_{grid})$ between the capacitance value $C$ of the output capacitor and the voltage difference between the DC input voltage $V_{in}$ and the grid voltage $V_{grid}$ by polynomial fitting.

Optionally, the Step D comprises:

according to the grid-connected current $i_{grid}$ and the grid-connected reference current $i_{ref}$, calculating the duty ratio $duty$ based on the following equation:

$$duty = G_P(i_{ref} - i_{grid})$$

**wherein** $G_P$ is the transfer function of a closed-loop controller.

According to another aspect of the present application, a grid-connected inverter is provided, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, a grid $Grid$, and a controller, wherein the calculation rule of the switching period $T_s$ meeting the zero-voltage switching condition and the mapping relationship between the capacitance value of the output capacitor and the voltage difference between the DC input voltage and the grid voltage are preset in the controller,

the controller is configured to acquire the DC input voltage, the grid voltage, a grid-connected current and a grid-connected reference current; determine the switching transistor operating at high frequency according to the polarity of the grid-connected reference current; determine the duty ratio based on a closed-loop regulation mechanism according to the grid-connected current and the grid-connected reference current; determine the switching period $T_s$ according to the calculation rule of the switching period $T_s$, the mapping relationship, the DC input voltage, the grid voltage, the grid-connected reference current and the duty ratio; and control the zero-voltage switching of the switching transistor according to the switching period $T_s$ and the duty ratio.

Optionally, the calculation rule of the switching period $T_s$ is:

$$\begin{cases} T_s = T_{on} + T_{off} + T_1 + T_2 + T_3 + nT_4 \\ T_{on} = \dfrac{2Li_p}{V_{in} - |V_{grid}|} \\ T_{off} = \dfrac{2Li_p}{V_{in} + |V_{grid}|} \\ T_1 = \dfrac{2LC}{2|i_{ref}| + \sqrt{\dfrac{C}{2L}}(V_{in} + |V_{grid}|)} \\ T_2 = \sqrt{2LC}\ arccos\left(\dfrac{|V_{grid}| - V_{in}}{|V_{grid}| + V_{in}}\right) \\ T_3 = \sqrt{2LC}\left(\dfrac{V_{in} + |V_{grid}|}{V_{in} - |V_{grid}|}\right) sin\left(\dfrac{T_2}{\sqrt{2LC}}\right) \\ T_4 = 2\pi\sqrt{2LC} \end{cases}$$

wherein, $n$ is the adjustment value of the switching period $T_s$ and is an integer greater than or equal to zero, $L$ is the inductance value of the filter inductor, $i_p = \dfrac{duty \times (T_1 + T_2 + T_3 + nT_4)(V_{in}^2 - V_{grid}^2)}{2L(V_{in} + |V_{grid}| - 2dutyV_{in})}$, $i_p$ is the peak value of the filter inductor current, *duty* is the duty ratio, $V_{in}$ is the DC input voltage, $V_{grid}$ is the grid voltage, $i_{ref}$ is the grid-connected reference current, and $C$ is the capacitance value of the output capacitor, which has a mapping relationship expressed as $C = f_3(V_{in} - V_{grid})$ with the voltage difference $V_{in} - V_{grid}$.

Optionally, the mapping relationship is determined based on the following method:

based on multiple sets of waveform data of the output capacitor voltage across the switching transistor operating at high frequency and the corresponding filter inductor current in different switching periods, measuring $T_4$ under conditions of different DC input voltages $V_{in}$ and different grid voltages $V_{grid}$, and calculating the capacitance value $C$ of the corresponding output capacitor according to the measured $T_4$; and

by taking the difference ($V_{in}$-$V_{grid}$) between the different DC input voltages $V_{in}$ and the different grid voltages $V_{grid}$ as input and taking the capacitance value $C$ of the output capacitor calculated according to the different DC input voltages $V_{in}$ and the different grid voltages $V_{grid}$ as output, obtaining the mapping relationship $C = f_3(Vi_n - V_{grid})$ between the capacitance value $C$ of the output capacitor and the voltage difference between the DC input voltage $V_{in}$ and the grid voltage $V_{grid}$ by polynomial fitting.

Beneficial effects of the embodiments of the present application are as follows:

different from the situation in the prior art, in the embodiment of the present application, a grid-connected inverter control method is provided, which comprises the following steps: firstly, based on the waveform data of an output capacitor voltage across a switching transistor operating at high frequency and the corresponding filter inductor current, determining a calculation rule of the switching period $T_s$ meeting the zero-voltage switching condition and the mapping relationship between the capacitance value of the output capacitor and the voltage difference between the DC input voltage and the grid voltage; then, acquiring the DC input voltage, the grid voltage, a grid-connected current and a grid-connected reference current, determining the switching transistor operating at high frequency according to the polarity of the grid-connected reference current, and determining the duty ratio based on a closed-loop regulation mechanism according to the grid-connected current and the grid-connected reference current; and finally, calculating the switching period $T_s$

according to the calculation rule of the switching period $T_s$, the mapping relationship, the DC input voltage, the grid voltage, the grid-connected reference current and the duty ratio, and controlling the zero-voltage switching of the switching transistor operating at high frequency according to the switching period $T_s$ and the duty ratio. By adopting the method of the present application, zero-voltage switching of the switching transistor is realized, which effectively reduces the loss caused by the turn-on process of the switching transistor.

**Brief Description of the Drawings**

One or more embodiments are exemplarily described with reference to pictures in corresponding attached drawings, and these exemplary descriptions are not intended to limit the embodiments. In the attached drawings, elements with the same reference numerals represent the same or similar elements, and unless otherwise stated, the pictures in the attached drawings are not intended to limit the scale.

FIG. 1 is a flowchart diagram of a grid-connected inverter control method provided according to an embodiment of the present application.
FIG. 2 is a schematic view of the topological structure of a grid-connected inverter provided according to an embodiment of the present application.
FIG. 3 is a schematic view of PWM driving signals of various switching transistors of the grid-connected inverter in FIG. 2.
FIG. 4 is a schematic view of the waveforms of the switching transistor $S_1/S_4$ driving, the output capacitor voltage $V_{C1}/V_{C4}$ and the filter inductor current $i_{L1}$ for the grid voltage $V_{grid}$ of the grid-connected inverter in FIG. 2 in a positive utility-frequency half-cycle.
FIG. 5 is a simulation result diagram of grid-connected current using the grid-connected inverter control method of FIG. 1.
FIG. 6 is a simulation control effect diagram using the grid-connected inverter control method of FIG. 1.
FIG. 7 is a schematic structural diagram of a grid-connected inverter provided according to an embodiment of the present application.

**Detailed Description of the Embodiments**

To make the objectives, technical solutions and advantages of embodiments of the present application more apparent, the technical solutions of the embodiments of this application will be described clearly and completely with reference to the attached drawings illustrating the embodiments of this application. Obviously, the embodiments described herein are only a part of but not all of the embodiments of this application. All other embodiments that can be obtained by those of ordinary skill in the art from the embodiments of this application without making creative efforts shall fall within the scope of this application.
In addition, the technical features involved in various embodiments of the present application described below can be combined with each other as long as they do not conflict with each other.
It shall be noted that, the steps shown in the flowchart diagrams of the accompanying drawings may be executed in a computer system such as a set of computer-executable instructions, and although logical orders are shown in the flowchart diagrams, in some cases, the steps shown or described may be executed in a different order from those described here.

Embodiment 1

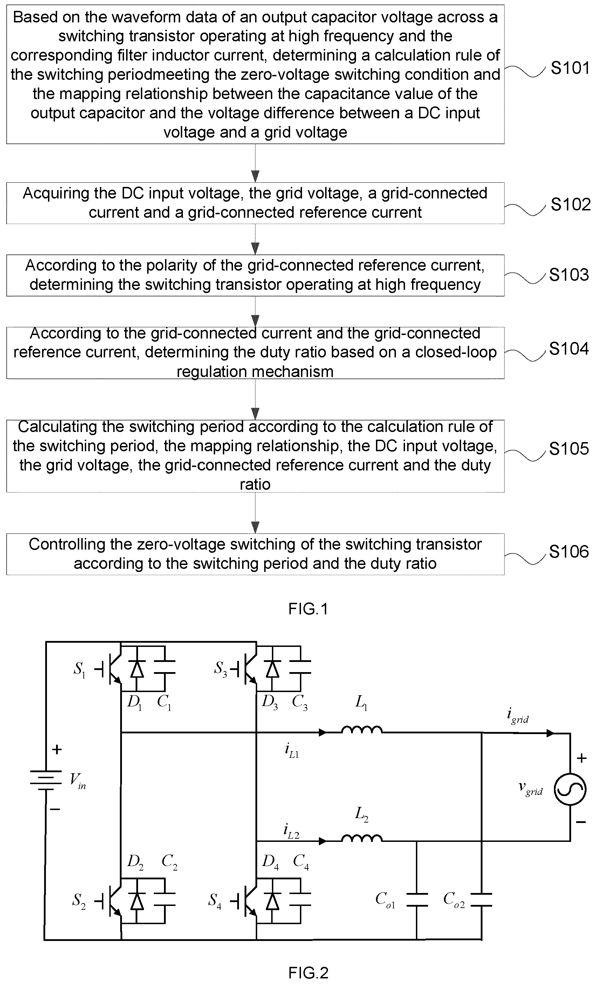

Referring to FIG. 1, there is shown a flowchart diagram of a grid-connected inverter control method provided according to an embodiment of the present application, and the method specifically includes the following steps:
Step S101: based on the waveform data of an output capacitor voltage across a switching transistor operating at high frequency and the corresponding filter inductor current, determining a calculation rule of the switching period $T_s$ meeting the zero-voltage switching condition and the mapping relationship between the capacitance value of the output capacitor and the voltage difference between the DC input voltage and the grid voltage.
In the embodiment of the present application, the network topological structure of the grid-connected inverter is as shown in FIG. 2. The grid-connected inverter comprises a DC voltage input source, switching transistors $S_1$ to $S_4$, and body diodes $D_1$ to $D_4$ and output capacitors $C_1$ to $C_4$ connected in parallel with the switching transistors $S_1$ to $S_4$, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, and a grid Grid. In order to keep the topological symmetry, models of the filter inductors $L_1$ and $L_2$ are the same, and models of the output capacitors $C_1$ to $C_4$ are the same. That is, $L_1 = L_2 = L$, and $C_1 = C_2 = C_3 = C_4 = C$. $L$ is the inductance value of the filter inductor, and $C$ is the capacitance value of the output capacitor.

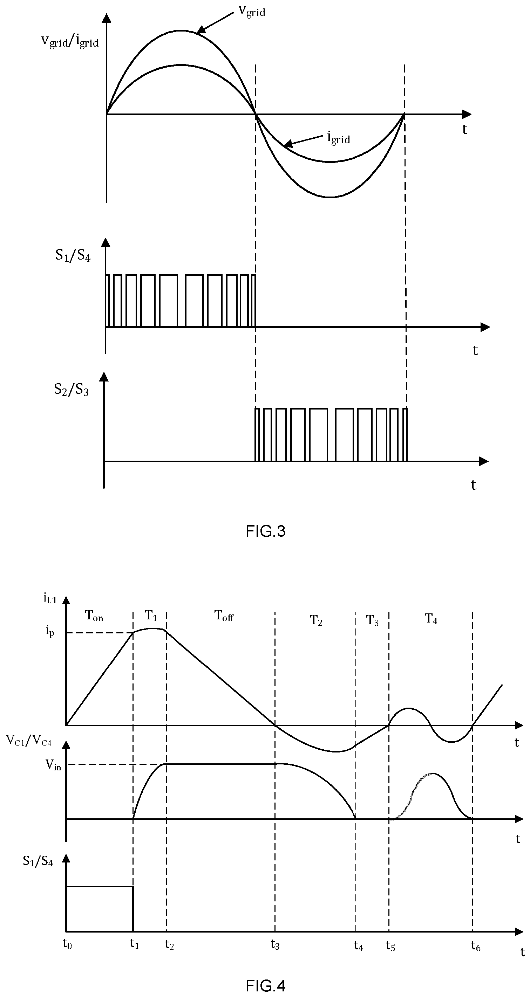

Referring to FIG. 3, there is shown a schematic view of PWM driving signals of various switching transistors of the grid-connected inverter in FIG. 2, in which phase angles of the grid voltage $V_{grid}$ and the grid-connected current $i_{grid}$ are the same. In the positive utility-frequency half-cycle of the grid voltage $V_{grid}$, the grid-connected reference current is positive, the pulse width of the high-frequency pulse width modulation (PWM) driving signal of the switching transistors $S_1/S_4$ changes according to the sinusoidal pattern, and the switching transistors $S_1/S_4$ are driven consistently, while the switching transistors $S_2/S_3$ remain turned off. At this time, the current flows from the positive pole of the DC voltage input source to the positive pole of the grid *Grid* through the switching transistor $S_1$ and the filter inductor $L_1$, and then returns to the negative pole of the DC voltage input source through the negative pole of the grid *Grid*, the filter inductor $L_2$ and the switching transistor $S_4$. In the negative utility-frequency half-cycle of the grid voltage $V_{grid}$, the grid-connected reference current is negative, the pulse width of the high-frequency PWM driving signal of the switching transistors $S_2/S_3$ changes according to the sinusoidal pattern, and the switching transistors $S_2/S_3$ are driven consistently, while the switching transistors $S_1/S_4$ remain turned off. At this time, the current flows from the positive pole of the DC voltage input source to the negative pole of the grid *Grid* through the switching transistor $S_3$ and the filter inductor $L_2$, and then returns to the negative pole of the DC voltage input source through the positive pole of the grid *Grid*, the filter inductor $L_1$ and the switching transistor $S_2$.

In the embodiment of the present application, the waveform data of the output capacitor voltage across the switching transistor operating at high frequency and the corresponding filter inductor current refers to the first waveform data of the output capacitor voltages $V_{c1}/V_{c4}$ of the output capacitors $C_1/C_4$ and the filter inductor **current** $i_{L1}$ of the filter inductor $L_1$ during the high-frequency operation of the switching transistors $S_1/S_4$, or the second waveform data of the output capacitor voltages $V_{c2}/V_{c3}$ of the output capacitors $C_2/C_3$ and the filter inductor current $i_{L2}$ of the filter inductor $L_2$ during the high-frequency operation of the switching transistors $S_2/S_3$. Due to the symmetry of the grid-connected inverter, the waveform structures of the first waveform data and the second waveform data are the same. When determining the calculation rule of the switching period $T_s$ meeting the zero-voltage switching condition, any set of waveform data in a switching period may be selected for analysis.

Specifically, firstly, based on a selected set of waveform data, the start/end time point of the switching period $T_s$ meeting the zero-voltage switching condition is determined; then according to the start/end time point of the switching period $T_s$, each of stages included in the switching period $T_s$ and the calculation rule of each of the stages are determined; and finally, the calculation rule of the switching period $T_s$ is obtained according to the calculation rule of each of the stages. In FIG. 2, a body diode and an output capacitor are connected in parallel with each of the switching transistors of the grid-connected inverter. The output capacitor voltage is the same as the drain-source voltage across the corresponding switching transistor. That is, when the output capacitor voltage is zero, the drain-source voltage across the corresponding switching transistor is also zero. Therefore, the time point where the filter inductor current and the output capacitor voltage are both zero in the waveform data is the start/end time point of the switching period $T_s$ meeting the zero-voltage switching condition.

Referring to FIG. 4, there is shown a schematic view of the waveforms of the switching transistor $S_1/S_4$ driving, the output capacitor voltages $V_{C1}/V_{C4}$ and the first filter inductor current $i_{L1}$ for the grid voltage $V_{grid}$ of the grid-connected inverter in FIG. 2 in a positive utility-frequency half-cycle. In the positive utility-frequency half-cycle, the grid-connected reference current is positive, the switching transistor $S_1/S_4$ operates at high frequency, and the switching transistor $S_2/S_3$ remains turned off. Before flowing into the grid, the grid-connected current passes through the filter inductor $L_1$ to generate the first filter inductor current $i_{L1}$. As can be seen from FIG. 4, a switching period may include the following six stages in the positive utility-frequency half-cycle:

(1) Switching transistor on-stage $T_{on}$

The switching transistor on-stage $T_{on}$ starts at time $t_0$ and ends at time $t_1$. Specifically, at the time $t_0$, the switching transistors $S_1/S_4$ are turned on, and the first filter inductor current $i_{L1}$ linearly increases from zero; and at the time $t_1$, $S_1/S_4$ are turned off, and $i_{L1}$ increases to the current peak $i_p$. Because the switching transistors $S_1/S_4$ are continuously in the on state, the output capacitor voltages $V_{C1} = V_{C4} = 0$.

(2) Output capacitor charging stage $T_1$

The output capacitor charging stage $T_1$ starts at time $t_1$ and end at time $t_2$. Specifically, at the time $t_1$, $i_{L1}$ charges the output capacitors $C_1/C_4$ of $S_1/S_4$, and $V_{C1}/V_{C4}$ rise from zero; and at the time $t_2$, $V_{C1} = V_{C4} = V_{in}$. Within the stage $T_1$, $i_{L1}$ remains approximately constant at $i_p$.

(3) Switching transistor off-stage $T_{off}$

The switching transistor off-stage $T_{off}$ starts at time $t_2$ and ends at time $t_3$. Specifically, at the time $t_2$, $i_{L1}$ decreases linearly from $i_p$, and at the time $t_3$, $i_{L1}$ decreases to zero. Within the stage $T_{off}$, $V_{C1}/V_{C4}$ remains constant at $V_{in}$.

(4) First resonance stage $T_2$

The first resonance stage $T_2$ starts at time $t_3$ and ends at time $t_4$. Specifically, at the time $t_3$, the inverter enters the first resonance stage, $L_1$, $C1$ and $C4$ form a resonance network, and $i_{L1}$ is reversed and discharges $C_1/C_4$. At the time $t_4$,

the voltage across $C_1/C_4$ is completely discharged to zero, i.e., $V_{C1} = V_{C4} = 0$.

(5) Body diode clamping stage $T_3$

The body diode clamping stage $T_3$ starts at time $t_4$ and ends at time $t_5$. Specifically, at the time $t_4$, $i_{L1}$ freewheels through the body diodes $D_1/D_4$, and $V_{C1}/V_{C4}$ are clamped to zero by $D_1/D_4$, i.e., $V_{C1} = V_{C4} = 0$, and at the time $t_5$, $i_{L1}$ linearly rises to zero.

(6) Second resonance stage $T_4$

The second resonance stage $T_4$ starts at time $t_5$ and ends at time $t_6$. Specifically, at the time $t_5$, the inverter enters the second resonance stage, and the amplitude of $i_{L1}$ and $V_{C1}/V_{C4}$ changes sinusoidally with the resonance period. At the time $t_6$, both $i_{L1}$ and $V_{C1}/V_{C4}$ resonate to zero, and at this time, the zero-voltage switching of the switching transistor can be realized. At this point, without external intervention, $i_{L1}$ and $V_{C1}/V_{C4}$ will keep cycling in the second resonance stage.

As can be known from the above-mentioned stages included in a switching period for the grid-connected inverter, the time when the output capacitor voltage $V_{C1}/V_{C4}$ and the filter inductor current $i_{L1}$ are both zero is the time corresponding to $t_5+nT_4$. $n$ is the adjustment value of the switching period $T_s$ and is an integer greater than or equal to zero. At all of these time points, zero-voltage switching of $S_1/S_4$ can be realized. Therefore, the switching period meeting the zero-voltage switching condition is $T_s = T_{on} + T_{off} + T_1 + T_2 + T_3 + nT_4$. Obviously, the minimum switching period $T_s$ is $T_{on} + T_{off} + T_1 + T_2 + T_3$. If the switching period is to be increased, then an appropriate value of n may be set according to the actual needs.

As can be known from FIG. 4, within the whole switching period $T_s$, $V_{C1}$ and $V_{C4}$ always remain equal. The capacitance value $C_1/C_4$ of the output capacitor of the switching transistor changes with the voltage $V_{C1}/V_{C4}$ across the capacitor. That is, in each switching period, the capacitance value $C$ of the output capacitor corresponding to the switching transistor in the on state is a function of the voltage $V_C$ of the output capacitor, i.e., $C = f_1(V_c)$. Therefore, the second resonance stage $T_4$ may be expressed as:

$$T_4 = 2\pi\sqrt{2Lf_1(V_c)} \qquad (1)$$

While in the second resonance stage $T_4$, $V_{C1}$ and $V_{C4}$ are positively correlated with the pressure difference $V_{in} - V_{grid}$, which may be expressed as:

$$V_{C1} = V_{C4} = f_2(V_{in} - V_{grid}) \qquad (2)$$

Further speaking, the equation (1) may be further expressed as:

$$T_4 = 2\pi\sqrt{2Lf_3(V_{in} - V_{grid})} \qquad (3)$$

$C$ is a function of pressure difference $V_{in} - V_{grid}$. When $T_4$ is known, C can be uniquely determined. Therefore, the mapping relationship $C = f_3(V_{in} - V_{grid})$ between the output capacitance $C$ and the voltage difference between the DC input voltage $V_{in}$ and the grid voltage $V_{grid}$ can be determined by the following operations:

firstly, based on multiple sets of waveform data of the output capacitor voltage (e.g., $V_{C1}/V_{C4}$) across the switching transistor operating at high frequency and the corresponding filter inductor current in different switching periods, measuring $T_4$ under conditions of different DC input voltages $V_{in}$ and different grid voltages $V_{grid}$, and calculating the capacitance value $C$ of the corresponding output capacitor according to the measured $T_4$ by using the equation (3);

secondly, by taking the difference $(V_{in}-V_{grid})$ between the different DC input voltages $V_{in}$ and the different grid voltages $V_{grid}$ as input and taking the capacitance value $C$ of the output capacitor calculated according to the different DC input voltages $V_{in}$ and the different grid voltages $V_{grid}$ as output, obtaining the mapping relationship $C = f_3(V_{i_n} - V_{grid})$ between the capacitance value $C$ of the output capacitor and the voltage difference between the DC input voltage $V_{in}$ and the grid voltage $V_{grid}$ by polynomial fitting. This mapping relationship is not only suitable for the differences of switching transistor devices from different manufacturers, but also considers the working condition that the capacitance of the output capacitor of the same switching transistor changes dynamically with the voltage across the capacitor.

Further speaking, according to the mapping relationship and based on Kirchhoff's voltage and current law, the calculation rules of the switching transistor on-stage $T_{on}$, the output capacitor charging stage $T_1$, the switching transistor off-stage $T_{off}$, the first resonance stage $T_2$, and the body diode clamping stage $T_3$ can be obtained specifically as follow:

$$T_{on} = \frac{2Li_p}{V_{in} - |V_{grid}|} \qquad (4)$$

$$T_{off} = \frac{2Li_p}{V_{in} + |V_{grid}|} \qquad (5)$$

$$T_1 = \frac{2LC}{2|i_{ref}| + \sqrt{\frac{C}{2L}(V_{in} + |V_{grid}|)}} \qquad (6)$$

$$T_2 = \sqrt{2LC}\, arccos\left(\frac{|V_{grid}| - V_{in}}{|V_{grid}| + V_{in}}\right) \qquad (7)$$

$$T_3 = \sqrt{2LC}\left(\frac{V_{in} + |V_{grid}|}{V_{in} - |V_{grid}|}\right) sin\left(\frac{T_2}{\sqrt{2LC}}\right) \qquad (8)$$

$i_p$ is the peak value of the filter inductor current. Within the switching period $T_s$, there is the following relationship between $i_p$ and the duty ratio *duty:*

$$i_p = \frac{duty \times (T_1 + T_2 + T_3 + nT_4)(V_{in}^2 - V_{grid}^2)}{2L(V_{in} + |V_{grid}| - 2dutyV_{in})} \qquad (9)$$

So far, the calculation rules of each of the stages (i.e., $T_{on}$, $T_{off}$, $T_1$, $T_2$, $T_3$, $T_4$) included in the switching period $T_s$ within the positive utility-frequency half-cycle and the mapping relationship $C = f_3(V_{in} - V_{grid})$ have been determined. As shall be appreciated, the calculation rule of the switching period in the negative utility-frequency half-cycle is the same as that in the positive utility-frequency half-cycle. The difference is that the grid voltage $V_{grid}$ and the grid-connected reference current $i_{ref}$ are negative in the negative utility-frequency half-cycle. Therefore, in order to unify the calculation, the absolute values of both the grid voltage $V_{grid}$ and the grid-connected reference current $i_{ref}$ are taken in the calculation rule of the switching period $T_s$.

Step S102, acquiring the DC input voltage, the grid voltage, the grid-connected current and the grid-connected reference current.

In the embodiment of the present application, the grid-connected inverter further comprises DC voltage sampling units, grid voltage sampling units and a grid-connected current sampling unit. The DC voltage sampling units are arranged at both sides of the DC voltage input source for collecting the DC input voltage in real time. The grid voltage sampling units are arranged at both sides of the grid voltage for collecting the grid voltage in real time. The grid-connected current sampling unit is arranged at the current output side of the inverter for collecting the grid-connected current in real time. In each switching period, the controller of the grid-connected inverter acquires the DC input voltage, the grid voltage and the grid-connected current in real time through the DC voltage sampling units, the grid voltage sampling units and the grid-connected current sampling unit.

The grid-connected reference current is a set value, and the waveform of the grid-connected reference current changes sinusoidally in a utility frequency period. The equation for the calculation of grid-connected reference current is:

$$i_{ref} = I_{ref}\sin(\omega t) \qquad (10)$$

wherein $I_{ref}$ is the amplitude of the grid-connected reference current, and $\omega t$ is the phase of the grid-connected reference current.

Step S103, according to the polarity of the grid-connected reference current, determining the switching transistor operating at high frequency.

For the grid-connected inverter shown in FIG. 2, when the grid-connected reference current is positive, the switching transistors $S_1/S_4$ are controlled to operate at high frequency; and when the grid-connected reference current is negative, the switching transistors $S_2/S_3$ are controlled to operate at high frequency.

Step S104, according to the grid-connected current and the grid-connected reference current, determining the duty ratio based on a closed-loop regulation mechanism.

In the embodiment of the present application, the closed-loop controller of the grid-connected current may be a Proportion Integration (PI) controller, a Proportional Integration Differentiation (PID) controller, and the like. The equation for the calculation of the duty ratio *duty* is:

$$duty = G_P(i_{ref} - i_{grid}) \qquad (11)$$

wherein $G_P$ is the transfer function of the closed-loop controller.

Step S105: determining the switching period $T_s$ according to the calculation rule of the switching period $T_s$, the mapping relationship, the DC input voltage, the grid voltage, the grid-connected reference current and the duty ratio.

In the embodiment of the present application, the calculation rule of the switching period $T_s$ meeting the zero-voltage switching condition and the mapping relationship between the capacitance value of the output capacitor and the voltage difference between the DC input voltage and the grid voltage, after being determined, are fixed in the controller of the grid-connected inverter. In each switching period, the controller acquires various parameter information required by the calculation rule, and brings the various parameter into the calculation rule of the switching period, so that the duration of each switching period can be calculated. As can be known from the calculation rule of the switching period $T_s$ obtained above, the parameter information includes the DC input voltage, the grid voltage, the grid-connected reference current and the duty ratio or the like.

Step S106, controlling the zero-voltage switching of the switching transistor according to the switching period $T_s$ and the duty ratio.

As shall be appreciated, after the calculation rule of the switching period $T_s$ meeting the zero-voltage switching condition and the mapping relationship between the capacitance value of the output capacitor and the voltage difference between the DC input voltage and the grid voltage are fixed into the controller, the controller only needs to execute steps S102 to S106 in each switching period.

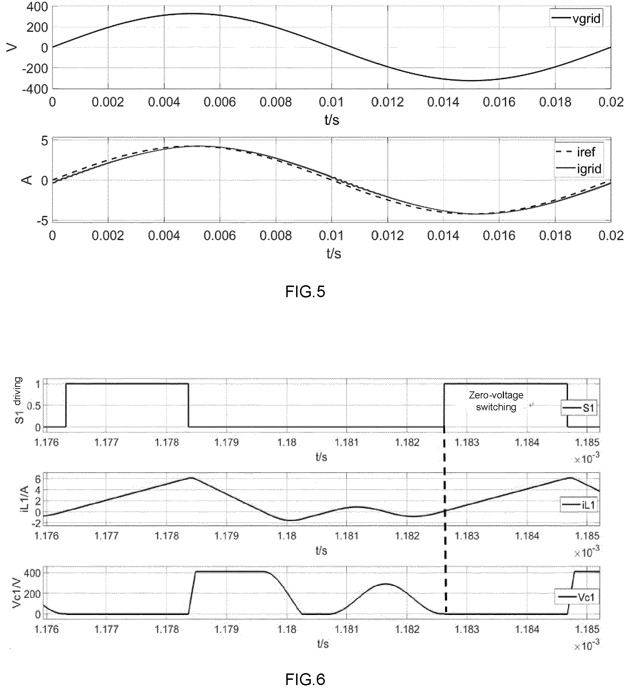

Referring to FIG. 5 and FIG. 6, FIG. 5 is a simulation result diagram of grid-connected current using the grid-connected inverter control method of FIG. 1; and FIG. 6 is a simulation control effect diagram using the grid-connected inverter control method of FIG. 1. As can be seen from FIG. 5 and FIG. 6, the grid-connected inverter control method of the present application ensures the synchronization of the grid-connected current and the grid-connected reference current while realizing the zero-voltage switching of the switching transistor.

For the grid-connected inverter control method provided according to the embodiments of the present application, firstly, based on the waveform data of the output capacitor voltage across the switching transistor operating at high frequency and the corresponding filter inductor current, the calculation rule of the switching period $T_s$ meeting the zero-voltage switching condition and the mapping relationship between the capacitance value of the output capacitor and the voltage difference between the DC input voltage and the grid voltage are determined; then, the DC input voltage, the grid voltage, the grid-connected current and the grid-connected reference current are acquired, the switching transistor operating at high frequency is determined according to the polarity of the grid-connected reference current, and the duty ratio is determined based on a closed-loop regulation mechanism according to the grid-connected current and the grid-connected reference current; and finally, the switching period $T_s$ is calculated according to the calculation rule of the switching period $T_s$, the mapping relationship, the DC input voltage, the grid voltage, the grid-connected reference current and the duty ratio, and the zero-voltage switching of the switching transistor operating at high frequency is controlled according to the switching period $T_s$ and the duty ratio. By adopting the method of the present application, zero-voltage switching of the switching transistor is realized, which effectively reduces the loss caused by the turn-on process of the switching transistor.

Embodiment 2

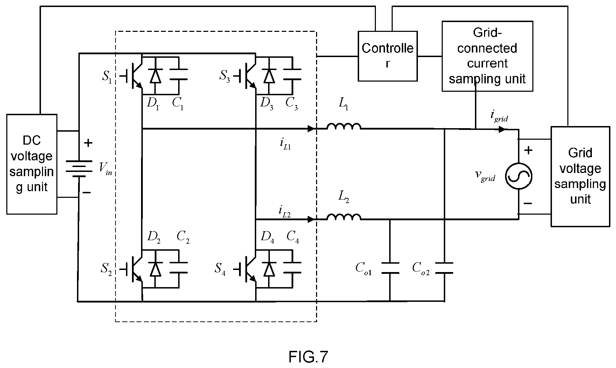

According to an embodiment of the present application, a grid-connected inverter is provided. As shown in FIG. 7, which is a schematic structural diagram of a grid-connected inverter provided according to an embodiment of the present application, the grid-connected inverter comprises a DC voltage input source, switching transistors $S_1$ to $S_4$, and body diodes $D_1$ to $D_4$ and output capacitors $C_1$ to $C_4$ connected in parallel with the switching transistors, a filter inductor $L_1$ and a filter capacitor $C_{o2}$ connected to the bridge arm where the switching transistor $S_1/S_2$ is located, a filter inductor $L_2$ and a filter capacitor $C_{o1}$ connected to the bridge arm where the switching transistor $S_3/S_4$ is located, a grid *Grid,* and a controller, wherein the calculation rule of the switching period $T_s$ meeting the zero-voltage switching condition and the mapping relationship between the capacitance value of the output capacitor and the voltage difference between the DC input voltage and the grid voltage are preset in the controller.

Specifically, the controller is configured to acquire the DC input voltage, the grid voltage, a grid-connected current and a grid-connected reference current; determine the switching transistor operating at high frequency according to the polarity of the grid-connected reference current; determine the duty ratio based on a closed-loop regulation mechanism according to the grid-connected current and the grid-connected reference current; determine the switching period $T_s$

according to the calculation rule of the switching period $T_s$, the mapping relationship, the DC input voltage, the grid voltage, the grid-connected reference current and the duty ratio; and control the zero-voltage switching of the switching transistor according to the switching period $T_s$ and the duty ratio.

In the embodiment of the present application, the grid-connected inverter further comprises DC voltage sampling units, grid voltage sampling units and a grid-connected current sampling unit. The DC voltage sampling units are arranged at both sides of the DC voltage input source for collecting the DC input voltage in real time. The grid voltage sampling units are arranged at both sides of the grid voltage for collecting the grid voltage in real time. The grid-connected current sampling unit is arranged at the current output side of the inverter for collecting the grid-connected current in real time. In each switching period, the controller acquires the DC input voltage, the grid voltage and the grid-connected current in real time through the DC voltage sampling units, the grid voltage sampling units and the grid-connected current sampling unit.

In the embodiment of the present application, based on a set of waveform data of the output capacitor voltage across the switching transistor operating at high frequency and the corresponding filter inductor current in a switching period, the start/end time point of the switching period $T_s$ meeting the zero-voltage switching condition can be determined; then based on the time point, each of stages included in the switching period $T_s$ and the calculation rule of each of the stages are determined, and the calculation rule of the switching period $T_s$ is obtained according to the calculation rule of each of the stages. Specifically, the switching period $T_s$ comprises a switching transistor on-stage $T_{on}$, an output capacitor charging stage $T_1$, a switching transistor off-stage $T_{off}$, a first resonance stage $T_2$, a body diode clamping stage $T_3$ and several second resonance stages $T_4$. That is, $T_s = T_{on} + T_{off} + T_1 + T_2 + T_3 + nT_4$, wherein n is an integer greater than or equal to 0.

In the embodiment of the present application, the calculation rule of the switching period $T_s$ is specifically as follows:

$$
\begin{cases}
T_s = T_{on} + T_{off} + T_1 + T_2 + T_3 + nT_4 \\[2mm]
T_{on} = \dfrac{2Li_p}{V_{in} - |V_{grid}|} \\[4mm]
T_{off} = \dfrac{2Li_p}{V_{in} + |V_{grid}|} \\[4mm]
T_1 = \dfrac{2LC}{2|i_{ref}| + \sqrt{\dfrac{C}{2L}}(V_{in} + |V_{grid}|)} \\[5mm]
T_2 = \sqrt{2LC}\, arccos\left(\dfrac{|V_{grid}| - V_{in}}{|V_{grid}| + V_{in}}\right) \\[4mm]
T_3 = \sqrt{2LC}\left(\dfrac{V_{in} + |V_{grid}|}{V_{in} - |V_{grid}|}\right) sin\left(\dfrac{T_2}{\sqrt{2LC}}\right) \\[4mm]
T_4 = 2\pi\sqrt{2LC}
\end{cases}
$$

wherein $n$ is the adjustment value of the switching period $T_s$ and is an integer greater than or equal to zero, $L$ is the inductance value of the filter inductor, $i_p = \dfrac{duty \times (T_1 + T_2 + T_3 + nT_4)(V_{in}^2 - V_{grid}^2)}{2L(V_{in} + |V_{grid}| - 2dutyV_{in})}$, $i_p$ is the peak value of the filter inductor current, $duty$ is the duty ratio, $V_{in}$ is the DC input voltage, $V_{grid}$ is the grid voltage, $i_{ref}$ is the grid-connected reference current, and $C$ is the capacitance value of the output capacitor, which has a mapping relationship expressed as $C = f_3(V_{in} - V_{grid})$ with the voltage difference $V_{in} - V_{grid}$.

As can be seen from the above calculation equation, when $T_4$ is known, C can be uniquely determined. Therefore, the mapping relationship $C = f_3(V_{in} - V_{grid})$ between the output capacitance $C$ and the voltage difference between the DC input voltage $V_{in}$ and the grid voltage $V_{grid}$ can be determined by the following operations:

firstly, based on multiple sets of waveform data of the output capacitor voltage (e.g., $V_{C1}/V_{C4}$) across the switching transistor operating at high frequency and the corresponding filter inductor current in different switching periods, measuring $T_4$ under conditions of different DC input voltages $V_{in}$ and different grid voltages $V_{grid}$, and calculating the capacitance value $C$ of the corresponding output capacitor according to the measured $T_4$ by using the equation (3); secondly, by taking the difference ($V_{in}-V_{grid}$) between the different DC input voltages $V_{in}$ and the different grid voltages

$V_{grid}$ as input and taking the capacitance value $C$ of the output capacitor calculated according to the different DC input voltages $V_{in}$ and the different grid voltages $V_{grid}$ as output, obtaining the mapping relationship $C = f_3(V_{in} - V_{grid})$ between the capacitance value $C$ of the output capacitor and the voltage difference between the DC input voltage $V_{in}$ and the grid voltage $V_{grid}$ by polynomial fitting.

Finally it shall be noted that, the above embodiments are only used to describe but not to limit the technical solutions of this application; and within the spirits of this application, technical features of the above embodiments or different embodiments may also be combined with each other, the steps may be implemented in an arbitrary order, and many other variations in different aspects of this application described above are possible although, for purpose of simplicity, they are not provided in the details. Although this application has been detailed with reference to the above embodiments, those of ordinary skill in the art shall appreciate that modifications can still be made to the technical solutions disclosed in the above embodiments or equivalent substations may be made to some of the technical features, and the corresponding technical solutions will not essentially depart from the scope of the embodiments of this application due to such modifications or substations.

**Claims**

1. A grid-connected inverter control method, being **characterized in that**, the method comprises:

    Step A, based on the waveform data of an output capacitor voltage across a switching transistor operating at high frequency and the corresponding filter inductor current, determining a calculation rule of the switching period $T_s$ meeting the zero-voltage switching condition and a mapping relationship between the capacitance value of the output capacitor and a voltage difference between a DC input voltage and a grid voltage;
    Step B, acquiring the DC input voltage, the grid voltage, a grid-connected current and a grid-connected reference current;
    Step C, according to the polarity of the grid-connected reference current, determining the switching transistor operating at high frequency;
    Step D, according to the grid-connected current and the grid-connected reference current, determining the duty ratio based on a closed-loop regulation mechanism;
    Step E, calculating the switching period $T_s$ according to the calculation rule of the switching period $T_s$, the mapping relationship, the DC input voltage, the grid voltage, the grid-connected reference current and the duty ratio; and
    Step F, controlling the zero-voltage switching of the switching transistor according to the switching period $T_s$ and the duty ratio.

2. The method according to Claim 1, being **characterized in that**, the Step A comprises:

    based on a set of waveform data of the output capacitor voltage across the switching transistor operating at high frequency and the corresponding filter inductor current in a switching period, determining the start/end time point of the switching period $T_s$ meeting the zero-voltage switching condition;
    according to the start/end time point of the switching period $T_s$, determining each of stages included in the switching period $T_s$ and the calculation rule of each of the stages; and
    obtaining the calculation rule of the switching period $T_s$ according to the calculation rule of each of the stages.

3. The method according to Claim 2, being **characterized in that**, the start/end time point of the switching period $T_s$ meeting the zero-voltage switching condition is the time point when the filter inductor current and the output capacitor voltage are both zero in the set of waveform data.

4. **The** method according to Claim 2 or 3, being **characterized in that**, the switching period $T_s$ comprises a switching transistor on-stage $T_{on}$, an output capacitor charging stage $T_1$, a switching transistor off-stage $T_{off}$, a first resonance stage $T_2$, a body diode clamping stage $T_3$ and several second resonance stages $T_4$.

5. The method according to Claim 4, being **characterized in that**, the calculation rule of the switching period $T_s$ is:

$$
\begin{cases}
T_s = T_{on} + T_{off} + T_1 + T_2 + T_3 + nT_4 \\[2mm]
T_{on} = \dfrac{2Li_p}{V_{in} - |V_{grid}|} \\[3mm]
T_{off} = \dfrac{2Li_p}{V_{in} + |V_{grid}|} \\[3mm]
T_1 = \dfrac{2LC}{2|i_{ref}| + \sqrt{\dfrac{C}{2L}}\,(V_{in} + |V_{grid}|)} \\[4mm]
T_2 = \sqrt{2LC}\ arccos\left(\dfrac{|V_{grid}| - V_{in}}{|V_{grid}| + V_{in}}\right) \\[3mm]
T_3 = \sqrt{2LC}\left(\dfrac{V_{in} + |V_{grid}|}{V_{in} - |V_{grid}|}\right) sin\left(\dfrac{T_2}{\sqrt{2LC}}\right) \\[3mm]
T_4 = 2\pi\sqrt{2LC}
\end{cases}
$$

wherein, $n$ is the adjustment value of the switching period $T_s$ and is an integer greater than or equal to zero, $L$ is the inductance value of the filter inductor, $i_p = \dfrac{duty \times (T_1 + T_2 + T_3 + nT_4)(V_{in}^2 - V_{grid}^2)}{2L(V_{in} + |V_{grid}| - 2dutyV_{in})}$, $i_p$ is the peak value of the filter inductor current, $duty$ is the duty ratio, $V_{in}$ is the DC input voltage, $V_{grid}$ is the grid voltage, $i_{ref}$ is the grid-connected reference current, and $C$ is the capacitance value of the output capacitor, which has a mapping relationship expressed as $C = f_3$ ($V_{in}$ - $V_{grid}$) with the voltage difference $V_{in}$ - $V_{grid}$.

6.  The method according to Claim 5, being **characterized in that**, the Step A further comprises:

    based on multiple sets of waveform data of the output capacitor voltage across the switching transistor operating at high frequency and the corresponding filter inductor current in different switching periods, measuring the second resonance stages $T_4$ under conditions of different DC input voltages $V_{in}$ and different grid voltages $V_{grid}$, and calculating the capacitance value $C$ of the corresponding output capacitor according to the measured the second resonance stages $T_4$;
    by taking the difference ($V_{in}$-$V_{grid}$) between the different DC input voltages $V_{in}$ and the different grid voltages $V_{grid}$ as input and taking the capacitance value $C$ of the output capacitor calculated according to the different DC input voltages $V_{in}$ and the different grid voltages $V_{grid}$ as output, obtaining the mapping relationship $C = f_3(V_{in} - V_{grid})$ between the capacitance value $C$ of the output capacitor and the voltage difference between the DC input voltage $V_{in}$ and the grid voltage $V_{grid}$ by polynomial fitting.

7.  The method according to Claim 5, being **characterized in that**, the step D comprises:

    according to the grid-connected current $i_{grid}$ and the grid-connected reference current $i_{ref}$, calculating the duty ratio $duty$ based on the following equation:

    $$duty = G_P(i_{ref} - i_{grid})$$

    **wherein** $G_P$ is the transfer function of a closed-loop controller.

8.  A grid-connected inverter, being **characterized in that**, the grid-connected inverter comprises a controller, wherein a calculation rule of the switching period $T_s$ meeting the zero-voltage switching condition and a mapping relationship between the capacitance value of the output capacitor and a voltage difference between a DC input voltage and a grid voltage are preset in the controller,
    the controller is configured to acquire the DC input voltage, the grid voltage, a grid-connected current and a grid-connected reference current; determine the switching transistor operating at high frequency according to the polarity of the grid-connected reference current; determine the duty ratio based on a closed-loop regulation mechanism according to the grid-connected current and the grid-connected reference current; determine the switching period $T_s$ according to the calculation rule of the switching period $T_s$, the mapping relationship, the DC input voltage, the grid voltage, the grid-connected reference current and the duty ratio; and control the zero-voltage switching of the switching transistor according to the switching period $T_s$ and the duty ratio.

9. **The** grid-connected inverter according to Claim 8, being **characterized in that**, the calculation rule of the switching period $T_s$ is determined based on a following method:

> based on a set of waveform data of the output capacitor voltage across the switching transistor operating at high frequency and the corresponding filter inductor current in a switching period, determining the start/end time point of the switching period $T_s$ meeting the zero-voltage switching condition;
> according to the start/end time point of the switching period $T_s$, determining each of stages included in the switching period $T_s$ and the calculation rule of each of the stages; and
> obtaining the calculation rule of the switching period $T_s$ according to the calculation rule of each of the stages.

10. The grid-connected inverter according to Claim 9, being **characterized in that**, the start/end time point of the switching period $T_s$ meeting the zero-voltage switching condition is the time point when the filter inductor current and the output capacitor voltage are both zero in the set of waveform data.

11. The grid-connected inverter according to Claims 9 or 10, being **characterized in that**, the switching period $T_s$ comprises a switching transistor on-stage $T_{on}$, an output capacitor charging stage $T_1$, a switching transistor off-stage $T_{off}$, a first resonance stage $T_2$, a body diode clamping stage $T_3$ and several second resonance stages $T_4$.

12. The grid-connected inverter according to Claim 11, being **characterized in that**, the calculation rule of the switching period $T_s$ is:

$$\begin{cases} T_s = T_{on} + T_{off} + T_1 + T_2 + T_3 + nT_4 \\ T_{on} = \dfrac{2Li_p}{V_{in} - |V_{grid}|} \\ T_{off} = \dfrac{2Li_p}{V_{in} + |V_{grid}|} \\ T_1 = \dfrac{2LC}{2|i_{ref}| + \sqrt{\dfrac{C}{2L}}\left(V_{in} + |V_{grid}|\right)} \\ T_2 = \sqrt{2LC}\, arccos\left(\dfrac{|V_{grid}| - V_{in}}{|V_{grid}| + V_{in}}\right) \\ T_3 = \sqrt{2LC}\left(\dfrac{V_{in} + |V_{grid}|}{V_{in} - |V_{grid}|}\right) sin\left(\dfrac{T_2}{\sqrt{2LC}}\right) \\ T_4 = 2\pi\sqrt{2LC} \end{cases}$$

wherein, $n$ is the adjustment value of the switching period $T_s$ and is an integer greater than or equal to zero, $L$ is the inductance value of the filter inductor, $i_p = \dfrac{duty \times (T_1 + T_2 + T_3 + nT_4)(V_{in}^2 - V_{grid}^2)}{2L(V_{in} + |V_{grid}| - 2dutyV_{in})}$, $i_p$ is the peak value of the filter inductor current, $duty$ is the duty ratio, $V_{in}$ is the DC input voltage, $V_{grid}$ is the grid voltage, $i_{ref}$ is the grid-connected reference current, and $C$ is the capacitance value of the output capacitor, which has a mapping relationship expressed as $C = f_3 (V_{in} - V_{grid})$ with the voltage difference $V_{in} - V_{grid}$.

13. The grid-connected inverter according to Claim 9, being **characterized in that**, the mapping relationship is determined based on a following method:

> based on multiple sets of waveform data of the output capacitor voltage across the switching transistor operating at high frequency and the corresponding filter inductor current in different switching periods, measuring the second resonance stages $T_4$ under conditions of different DC input voltages $V_{in}$ and different grid voltages $V_{grid}$, and calculating the capacitance value $C$ of the corresponding output capacitor according to the measured the second resonance stages $T_4$;

by taking the difference ($V_{in}$-$V_{grid}$) between the different DC input voltages $V_{in}$ and the different grid voltages $V_{grid}$ as input and taking the capacitance value C of the output capacitor calculated according to the different DC input voltages $V_{in}$ and the different grid voltages $V_{grid}$ as output, obtaining the mapping relationship $C = f_3(V_{in} - V_{grid})$ between the capacitance value $C$ of the output capacitor and the voltage difference between the DC input voltage $V_{in}$ and the grid voltage $V_{grid}$ by polynomial fitting.

14. The grid-connected inverter according to Claim 12, being **characterized in that**, the duty ratio is determined based on a following method:

according to the grid-connected current $i_{grid}$ and the grid-connected reference current $i_{ref}$, calculating the duty ratio *duty* based on the following equation:

$$duty = G_P(i_{ref} - i_{grid})$$

Based on the waveform data of an output capacitor voltage across a switching transistor operating at high frequency and the corresponding filter inductor current, determining a calculation rule of the switching periodmeeting the zero-voltage switching condition and the mapping relationship between the capacitance value of the output capacitor and the voltage difference between a DC input voltage and a grid voltage ⟶ S101

Acquiring the DC input voltage, the grid voltage, a grid-connected current and a grid-connected reference current ⟶ S102

According to the polarity of the grid-connected reference current, determining the switching transistor operating at high frequency ⟶ S103

According to the grid-connected current and the grid-connected reference current, determining the duty ratio based on a closed-loop regulation mechanism ⟶ S104

Calculating the switching period according to the calculation rule of the switching period, the mapping relationship, the DC input voltage, the grid voltage, the grid-connected reference current and the duty ratio ⟶ S105

Controlling the zero-voltage switching of the switching transistor according to the switching period and the duty ratio ⟶ S106

FIG.1

FIG.2

FIG.3

FIG.4

FIG.5

FIG.6

FIG.7

Europäisches Patentamt
European Patent Office
Office européen des brevets

# EUROPEAN SEARCH REPORT

**Application Number**

EP 25 18 5851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG CHENG ET AL: "Full ZVS Achievement for DCM Grid-Tied Inverter With Improved Average Current Model and Considering Nonlinear Parasitic Capacitance", IEEE JOURNAL OF EMERGING AND SELECTED TOPICS IN POWER ELECTRONICS, vol. 12, no. 1, 1 February 2024 (2024-02-01), pages 472-485, XP093328306, Piscataway, NJ, USA ISSN: 2168-6777, DOI: 10.1109/JESTPE.2023.3336693 * figure 1 * * figures 5-6 * * figure 8 * * figure 18 * * abstract * * page 473 - page 478 * | 1-14 | INV. H02M1/00 H02M7/48 H02M7/5387 H02M7/5395 |
| A | HUANG CHENG ET AL: "Improved Off-time Discrete Control for DCM Grid-tied Inverter with Accurate Average Current Model and Considering Nonlinear Parasitic Capacitance", 2021 IEEE ENERGY CONVERSION CONGRESS AND EXPOSITION (ECCE), IEEE, 10 October 2021 (2021-10-10), pages 2322-2328, XP034020133, DOI: 10.1109/ECCE47101.2021.9595522 [retrieved on 2021-10-29] * figure 1 * * figure 4 * * page 2325 * | 1-14 | **TECHNICAL FIELDS SEARCHED (IPC)** H02M |
| A,P | CN 118 432 413 A (SHENZHEN POWEROAK NEW ENERGY CO LTD) 2 August 2024 (2024-08-02) * figure 2 * * figure 6 * | 1-14 | |

-/--

The present search report has been drawn up for all claims

| Place of search | Date of completion of the search | Examiner |
|---|---|---|
| The Hague | 24 October 2025 | Riehl, Philippe |

EPO FORM 1503 03.82 (P04C01)

Europäisches
Patentamt

European
Patent Office

Office européen
des brevets

## EUROPEAN SEARCH REPORT

Application Number

EP 25 18 5851

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | CN 118 432 410 A (SHENZHEN POWEROAK NEW ENERGY CO LTD) 2 August 2024 (2024-08-02) * figure 2 * * figure 6 * ----- | 1-14 | |
| A,P | CN 119 070 405 A (SHENZHEN POWEROAK NEW ENERGY CO LTD) 3 December 2024 (2024-12-03) * figure 1 * * figure 7 * ----- | 1-14 | |

TECHNICAL FIELDS
SEARCHED      (IPC)

The present search report has been drawn up for all claims

| Place of search | Date of completion of the search | Examiner |
|---|---|---|
| The Hague | 24 October 2025 | Riehl, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 18 5851

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2025

| Patent document cited in search report | | Publication date | Patent family member(s) | Publication date |
|---|---|---|---|---|
| CN 118432413 | A | 02-08-2024 | NONE | |
| CN 118432410 | A | 02-08-2024 | NONE | |
| CN 119070405 | A | 03-12-2024 | NONE | |

EPO FORM P0459

For more details about this annex : see Official Journal of the European Patent Office, No. 12/82